# EUROPEAN PATENT APPLICATION

(11) **EP 2 815 823 A1**
(43) Date of publication of application: **24.12.2014**
(21) Application number: 13172553.3
(22) Date of filing: 18.06.2013
(51) Int. Cl.: B22F 3/105, C22C 1/04, C22C 1/10, C22C 19/03, B22F 5/00

(54) **Method for producing a three-dimensional article and article produced with such a method**

(71) Applicant: ALSTOM Technology Ltd, 5400 Baden (CH)
(72) Inventor: Engeli, Roman, 8050 Zurich (CH); Hoevel, Simone, 5426 Lengnau (CH); Stankowski, Alexander, 5303 Wuerenlingen (CH); Etter, Thomas, 5037 Muhen (CH); Haehnle, Hartmut, 79790 Kuessaberg (DE)

(57) **Abstract**

The invention relates to a method for producing a three-dimensional article or at least a part of such an article made of a gamma prime (γ') precipitation hardened nickel base superalloy with a high volume fraction (>25 %) of gamma-prima phase which is a difficult to weld superalloy, or made of a cobalt base superalloy, or of a non-castable or difficult to machine metal material by means of selective laser melting (SLM), in which the article is produced by melting of layerwise deposited metal powder with a laser beam characterized in that the SLM processing parameters are selectively adjusted to locally tailor the microstructure and/or porosity of the produced article or a part of the article and therefore to optimize desired properties of the finalized article/part of the article.

## Description

### BACKGROUND OF THE INVENTION

The present invention relates to the technology of producing a three-dimensional article by means of selective laser melting (SLM). It refers to a method for producing an article or at least a part of such an article preferably made of a gamma prime (γ') precipitation hardened nickel base superalloy with a high volume fraction (>25 %) of gamma-prima phase or of a non-castable or difficult to machine material and to an article made with said method. More particularly, the method relates to producing of new or repairing of used and damaged turbine components.

### PRIOR ART

Gas turbine components, such as turbine blades, often have complex three-dimensional geometries that may have difficult fabrication and repair issues.

The build-up of material on ex-service turbine components, for example during reconditioning, is usually done by conventional build-up welding such as tungsten inert gas (TIG) welding or laser metal forming (LMF). The use of these techniques is limited to materials with acceptable weldability such as for solution-strengthened (e.g. IN625, Heynes230) or gamma-prime strengthened nickel-base superalloys with low to medium amount of Al and Ti (e.g. Haynes282). Nickel-base superalloys with high oxidation resistance and high gamma-prime content (>25 Vol.-%), that means with a high combined amount of at least 5 wt.- % Al and Ti, such as IN738LC, MarM-247 or CM-247LC are typically difficult to weld and cannot be processed by conventional build-up welding without considerable micro-cracking. The gamma-prime phase has an ordered FCC structure of the L12 type and form coherent precipitates with low surface energy. Due to the coherent interface and the ordered structure, these precipitates are efficient obstructions for dislocation movement and strongly improve the strength of the material even at high temperature. The low surface energy results in a low driving force for growth which is the reason for their long-term high temperature stability. In addition to the formation of gamma-prime phase, the high Al content results in the formation of a stable surface oxide layer resulting in superior high temperature oxidation resistance. Due to the extraordinary high temperature strength and oxidation resistance, these materials are preferably used in highly stressed turbine components. Typical examples of such gamma-prime strengthened nickel-base superalloys are: Mar-M247, CM-247LC, IN100, In738LC, IN792, Mar-M200, B1900, Rene80 and other derivatives

With conventional build-up welding techniques, for example TIG or LMF these gamma-prime strengthened superalloys can hardly be processed without considerable formation of microcracks.

Different cracking mechanism have been identified in the literature: Cracking can occur during the final stage of solidification, where dendrite formation inhibits the backfilling of liquid, resulting in crack initiation in the isolated sections. This mechanism is called "solidification cracking" (SC). So-called "Liquation cracking" (LC) occurs when dissolution of precipitates in the heat affected zone is retarded due to the fast heat-up during welding. As a result, the precipitates still exist at temperatures where they are not thermodynamically stable and an eutectic composition is formed at the interface region. When the temperature exceeds the relatively low eutectic temperature this interface regions melts and wets the grain boundaries. These weakened grain boundaries cannot anymore accommodate the thermal stresses, resulting in crack formation. Cracking can also occur in the solid state when previously processed layers are reheated to a temperature at which precipitations can form. The precipitation results in stress formation due to volumetric changes, in increased strength and in loss of ductility. Combined with the superimposed thermal stresses, the rupture strength of the material can be locally exceeded and cracking occurs. This mechanism is referred to as "strain-age cracking" (SAC).

Due to the high fraction of precipitates and the resulting high mechanical strength, the ability to relax thermal stresses is strongly reduced. For this reason gamma-prime precipitation hardened superalloys are especially prone to these cracking mechanisms and very difficult to weld.

Another issue is that state-of-the-art reconditioning processes often take a long time due to the many process steps involved. In the repair of turbine blades for example, crown plate replacement, tip replacement and/or coupon repair require different process steps. This results in high costs and long lead times.

The efficiency of a gas turbine increases with increasing service temperature. As the temperature capability of the used materials is limited, cooling systems are incorporated into turbine components. Different cooling techniques exist such as film cooling, effusion cooling or transpiration cooling. However, the complexity of the cooling system is limited by the fabrication process. State-of-the-art turbine components are designed with respect to these limited fabrication processes, which impede in most cases the optimal technical solution. Transpiration cooling has currently limited applications, as those porous structure have problems coping with the mechanical and thermal stresses.

Another drawback of conventional turbine blades is that they require the extraction of the cast core and must therefore have an open crown tip. The crown tip must subsequently be closed by letter box brazing, which is an additional critical step during fabrication. Additionally to these geometric restrictions, the state-of-the-art fabrication processes are often limited in the material choice and require castable or weldable material.

It is also known state of the art that abradable coatings or honeycombs are added on vanes and heat shields in order to avoid gas leakage which would result in decreased efficiency. The turbine blade tip cuts into this abradable structure during the running-in process, which results in a good sealing. However, due to the high abrasive effect of the turbine blade tip, the abradable layer is often strongly damaged during this process and therefore often requires complete replacement after each service interval. Due to limited material choice, oxidative losses of tip is a further common problem.

Selective laser melting (SLM) for the direct build-up of material on new or to be repaired/reconditioned turbine components has several advantages and can overcome the shortcomings mentioned above.

Due to the extremely localized melting and the resulting very fast solidification during SLM, segregation of alloying elements and formation of precipitates is considerably reduced. This results in a decreased sensitivity for cracking compared to conventional build-up welding techniques. In contrast to other state-of-the-art techniques, SLM allows the near-net shape processing of non-castable, difficult to machine or difficult to weld materials such as high Al+Ti containing alloys (eg. IN738LC). The use of such high temperature strength and oxidation resistant materials significantly improves the properties of the built-up turbine blade section.

Porosity is a known phenomenon in the field of additive manufacturing, such as SLM. Apart from medical applications, the appearance of porosity is an effect that has to be minimized because porosity affects material properties such as strength, hardness and surface quality negatively. The SLM process parameters are therefore usually, especially for gas turbine components, optimized for highest density. Residual porosity is considered detrimental and therefore unwanted.

In contrast to casting and conventional repair techniques (e.g. build-up welding), SLM offers a much higher design freedom and allows the production of very complex structures ("complexity for free"). In addition, the use of SLM can reduce the amount of process steps, by combination of different repair processes in one single process.

In document WO 2009/156316 A1 a method for producing a component with coating areas by means of selective laser melting is disclosed. The coating areas have a composition that differs from the composition of the substrate material. This is accomplished by intermittently introducing a reactive gas that reacts with the powder material during SLM process. Therefore, during production of the component, layer regions arise, which can ensure particular functions of the component, for example a hardened surface.

Document EP 2319641 A1 describes a method to apply multiple materials with a selective laser melting process which proposes the use of foils/tapes/sheets or three-dimensional reforms instead of different powder for a second and additional material different from the previous (powder based) to be applied. These foils, tapes, sheets or preforms can be applied on different sections / portions of three-dimensional articles, for example on edges with abrasive materials, or on surfaces to improve the heat transfer, so that an adjustment of the microstructure/chemical composition with respect to the desired properties of the component/article can be achieved.

Document US2008/0182017 A1 discloses a method for laser net shape manufacturing a part or repairing an area of a part by deposition a bead of a material, wherein the deposited material may be varied or changed during the deposition such that the bead of material is formed of different materials.

Document EP 2586548 A1 describes a method for manufacturing a component or a coupon by means of selective laser melting SLM with an aligned grain size distribution dependent on the distribution of the expected temperature and/or stress and /or strain of the component during service/operation such that the lifetime of the component is improved with respect to a similar component with substantially uniform grain size.

### SUMMARY OF THE INVENTION

It is an object of the present invention to provide an efficient method for producing an article or at least a part of such an article made of a gamma prime (γ') precipitation hardened nickel base superalloy with a high volume fraction (>25 %) of gamma-prima phase, which is difficult to weld, or of a non-castable or difficult to machine material and to an article made with said method. More particularly, the method relates to producing of new or repairing of used and damaged turbine components.

According to the preamble of independent claim 1 the method is related to producing a three-dimensional article or at least a part of such an article made of a gamma prime (γ') precipitation hardened nickel base superalloy with a high volume fraction (>25 %) of gamma-prima phase which is a difficult to weld superalloy, or made of a cobalt base superalloy, or of a non-castable or difficult to machine metal material by means of selective laser melting (SLM), in which the article is produced by melting of layerwise deposited metal powder with a laser beam. The method is characterized in that the SLM processing parameters are selectively adjusted to locally tailor the microstructure and/or porosity of the produced article or a part of the article and therefore to optimize desired properties of the finalized article/part of the article.

The three-dimensional article or at least a part of such an article produced with a method according to present invention is gas turbine component or a section/part of a gas turbine component.

Preferable embodiments of the invention are described in the dependent claims, which disclose for example:
- that a subsequent heat treatment step for further adjustment of the microstructure is applied,
- that the processing parameters to be adjusted are at least one or a combination of laser power, scan velocity, hatch distance, powder shape, powder size distribution, processing atmosphere,
- that the resulted microstructure and/or porosity of the deposited layers are different,
- that the resulted microstructure and/or porosity is gradually changing in radial or lateral direction of the article,
- that the resulted porosity is a closed or opened porosity,
- that the selectively introduced porosity is used to adjust mass related properties, preferable the eigenfrequency or to counterbalance the effect of additionally added material on an component,
- that the tailored microstructure comprises in-situ generated second phase particles, preferably hard-phase particles or solid lubricants,
- that the elements forming the second phase particles, are supplied at least partly by a reactive gas (processing atmosphere) and/or by the SLM metal powder or by the base metal (alloys),
- that the composition of the reactive gas is actively changed during the SLM process,
- that Re, Ti, Ni, W, Mo, B are supplied for forming highly lubricous oxides at high temperatures,
- that elements forming second phase particles are carbide, boride, nitride, oxide or combinations thereof forming elements, such as Al, Si, Zr, Cr, Re, Ti, Ni, W, Mo, Zn, V,
- that existing holes or channels in the article are filled with a polymeric substance and an inorganic filler material prior to the built-up of SLM layers and the polymeric filler is burnt out during a subsequent heat treatment step,
- that the method is used for producing of new or repairing of used and damaged turbine components,
- that the produced article has a locally tailored microstructure (material composition, layers, gradients and/or porosity),
- that the article comprises at least one part with an open porous structure,
- that the article comprises an open-porous outer layer and a fully dense inner layer including cooling channels designed for guiding a cooling medium to the open porous outer layer, which cooling channels either end at the interface to the open porous outer layer or partly or fully penetrate the open-porous outer layer,
- that an open porous surface thermal barrier coating layer is applied onto the open porous outer layer,
- that the article comprises a complex design structure, but without overhanging areas with an angle of ≥ 45° or with sharp concave edges,
- that the article is a turbine blade crown,
- that the article is a turbine component, on which the section built is either new or an ex-service component.

The present invention relates to the additive build-up of a turbine blade section out of a gamma-prime precipitation hardened nickel-base superalloy with locally tailored microstructure on an existing turbine blade by the means of selective laser melting (SLM). The direct build-up of material on turbine components (new or reconditioned) using SLM is proposed which has several advantages:
- Due to the extremely localized melting and the resulting very fast solidification during SLM, segregation of alloying elements and formation of precipitates is considerably reduced. This results in a decreased sensitivity for cracking compared to conventional build-up welding techniques. In contrast to other state-of-the-art techniques, SLM allows the near-net shape processing of non-castable, difficult to machine or difficult to weld materials such as high Al+Ti containing alloys (eg. IN738LC). The use of such high temperature strength and oxidation resistant materials significantly improves the properties of the built-up turbine blade section.
- In build-up welding and additive manufacturing methods, the resulting density in the processed material is strongly dependent on the process parameters. Apart from medical applications, the process parameters are usually optimized for highest density and residual porosity is considered detrimental and therefore unwanted. The possibility to selectively tailor the microstructure and the porosity in the material by locally adjusting process parameters during SLM combined with its increased design freedom however opens new potential in the design of the material properties. One example of benefit could be the reduction of the abrasive effect of the turbine blade crown to reduce honeycomb damages. Another example could be the fabrication of section using process parameters which result open porosity allowing transpiration cooling. Furthermore, structures with graded or layered microstructure can be fabricated in one single fabrication process. This allows for example to produce structures with dense (for strength) and open-porous (for cooling) layers and therefore has the potential to overcome the current drawback of manufacturing transpiration cooling. With a porous structure one can also influence the mass of a manufactured part, which can be used to tune the eigenfrequency or the influence centrifugal forces pulling on the rotor (e.g. in combination with a blade extension for a retrofit upgrade) or influencing the mass in any other specific or general way. In the adding material with different properties of thermal expansion also bi-metallic effects can be built-in.
- In contrast with casting and conventional repair techniques (e.g. build-up welding), SLM offers a much higher design freedom and allows the production of very complex structures ("complexity for free")
- The use of SLM can reduce the amount of process steps, by combination of different repair processes in one single process. An example is the combined replacement of the blade crown and tip in one single process. In case of small volume or individualized coupon repair, costs and lead times can be considerably reduced when the coupon is manufactured by SLM in comparison to casting, as the components are directly fabricated from CAD files and no cast tooling is required. The use of SLM can therefore result in reduced costs and lead times.

In the present disclosure it is proposed to use SLM for the build-up of turbine component (rotating or static, abradable or abrasive) sections either on new parts or during reconditioning of used components:
- using difficult-to-weld, non-castable or difficult to machine materials which could not yet be processed such as high Al+Ti containing alloys (eg. IN738LC).
- tailoring the microstructure of the built-up sections by selectively introducing pores as design element to adjust the physical and mechanical properties of the material according to the local needs.
- exploiting the design freedom of the SLM process to incorporate special features such as pores or channels, e.g. for cooling, into the built-up turbine component section
- using SLM optimized designs such as rounded inner edges instead of sharp edges to minimize the required support structures.
- to reduce lead time / through-put time and costs in reconditioning.

### BRIEF DESCRIPTION OF THE DRAWINGS

The present invention is now to be explained more closely by means of different embodiments and with reference to the attached drawings.
- Fig. 1: shows as a first embodiment a blade tip with the blade crown and an opposite arranged abradable (heat shield, SLM generated with tailored porosity);
- Fig. 2: shows the part from Fig. 1 after running in process;
- Fig. 3: shows a metallographic cut of a IN738LC test specimen treated according to the disclosed method showing a high porosity after SLM;
- Fig. 4: shows a metallographic cut of a IN738LC test specimen treated according to the disclosed method showing a medium porosity after SLM;
- Fig. 5, 6: show as two additional embodiments of the invention a cut through a wall, for example a blade tip, with different layers and cooling channels for efussion/transpiration cooling;
- Fig. 7: shows a similar embodiment for a turbine blade with a dense area and an open-porous built-up blade crown;
- Fig. 8: shows an additional embodiment analog to Fig. 7, but with ribs in the open-porous structure;
- Fig. 9: shows an additional embodiment analog to Fig. 6, but with ribs in the open-porous structure after production of the blade (short service time of the blade);
- Fig. 10: shows the embodiment according to Fig. 9 after a long service time of the gas turbine with damaged areas 15;
- Fig. 11: shows two embodiments of the inventions for a modified turbine blade and a modified compressor blade with a modified cross section of the airfoil;
- Fig. 12: shows details of Fig. 11 and
- Fig. 13, 14: show cross sections of the blade according to Fig. 12 at different length of the airfoil 16' as indicated in Fig. 12.

### DETAILED DESCRIPTION OF DIFFERENT EMBODIMENTS OF THE INVENTION

### First embodiment:

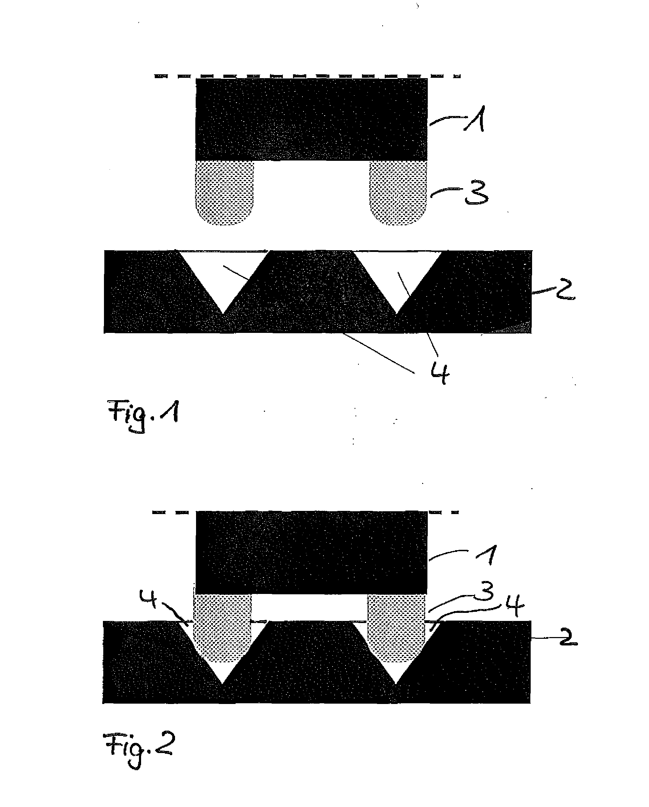

The first embodiment of the invention is a build-up of a blade crown 3 of a gas turbine blade tip 1 and heat shield 2 by SLM with selectively adjusted pore structure 4 to reduce wear by the resulting decreased abrasivity. Fig. 1 and Fig. 2 demonstrate this first embodiment of the invention, Fig. 2 shows the optimal sealing even after running in process with minimized damage of the bade tip 1 and the heat shield 2.

To get high efficiency, the gas leak between the blade tip 1 and the heat shield 2 must be minimized (see Fig. 1). A good sealing is commonly achieved by a grind in process of the turbine blade during heat-up, caused by thermal expansion. Generally, the blade crown 3 is designed as abrasive component, which runs into heat shield 2 designed as abradable. Thermal cycles during service result in a varying distance between the blade tip 1 and the shroud 2. The blade tip 1 can occasionally touch the shroud 2 and the resulting rubbing damages the blade tip 1 and the head shield 2. Increasing the gap width would result in higher leaking and lower efficiency and is not desired.

An optimal design matching of the abradable and the abrasive is required to obtain an effective, long lasting tip sealing. In addition, several other properties such as oxidation resistance need to be considered, which can inhibit optimal abrasive / abradable interaction. Furthermore, limitation in state-of the art fabrication processes also inhibit optimal material selection, escpecially during reconditioning of gas turbine components.

An implementation of this invention is the fabrication of a blade crown 3 with increasing porosity towards the blade tip using selective laser melting. The advantage of this set-up is twofold: By using SLM for the build-up process, materials can be applied which cannot be processed by conventional repair methods. Furthermore, the in-situ generation of secondary phase particles allows an optimal tuning of the wear / abrasion behavior between the abrasive and abradable. This can reduce the excessive damage of the abradable during running-in process.

In another implementation, secondary phase particles are incorporated, which result in a solid-state self-lubrication.

The porosity can be introduced either as designed structure in the 3D CAD model, which is then reproduced during SLM build up or by adjustment of the process parameter (eg. Laser power, Scan velocity, Hatch distance, Layer thickness) in a way that the resulting structure is not completely dense.

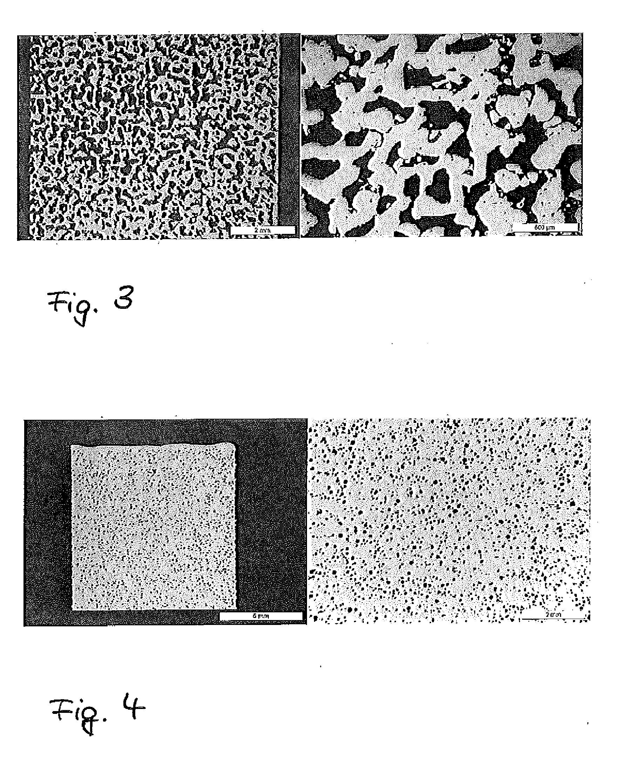

Two examples for porosity generated by process parameter adjustment according to the disclosed method are shown in Fig. 3 and Fig. 4 for the nickel base superalloy IN738LC.

Fig. 3 shows a microstructure with high porosity for the following process parameter:

| | |
|---|---|
| Scan velocity: | 400mm/s |
| Power : | 100W |
| Hatch distance: | 140um |
| Layer thickness: | 30µm |

Fig. 4 shows a microstructure with medium porosity for the following process parameter:

| | |
|---|---|
| Scan velocity: | 240mm/s |
| Power: | 180W |
| Hatch distance: | 110µm |
| Layer thickness: | 30µm |

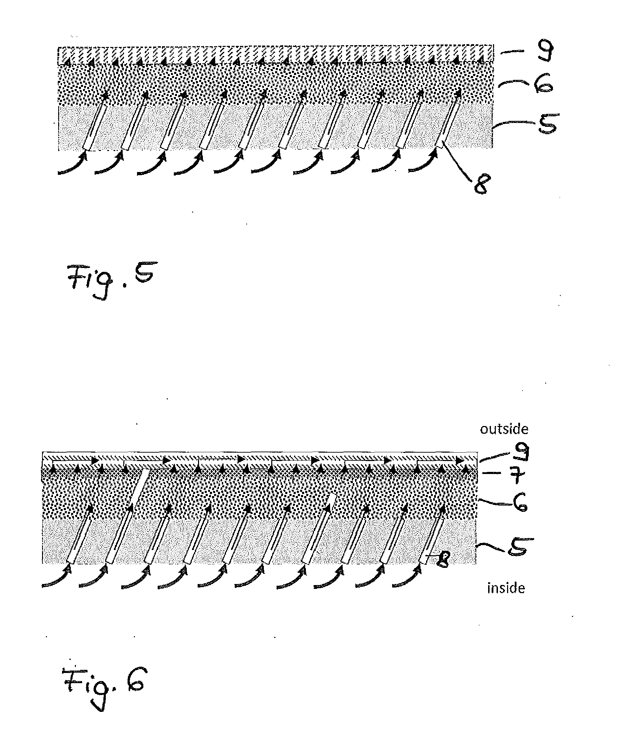

An additional implementation (see Fig. 5) incorporates active effusion / transpiration cooling 9 of the built-up section by incorporation of open porosity in the SLM fabricated turbine section by adjusting the process parameters. The open porous section 6 can either stand alone or being built upon a dense structure 5 to increase the mechanical stability. In the second case (see Fig. 5), the cooling air is supplied to the open porous section 6 by cooling holes 8. The dense section 5 can either be already present (eg. from casting) or be fabricated already incorporating the cooling holes 8 in the same single SLM process together with porous part 6. This allows the easy preparation of combined effusion/transpiration and/or near wall cooling in one single process step.

Different types of such channels 8 can be incorporated in the built-up section. The cooling air is finely distributed in the porous layer and homogenously exits the surface resulting in efficient transpiration cooling of the blade surface. The open-porous structure shows a lower thermal conductivity as when dense, which further reduces the thermal loading of the dense structural layer. An open-porous thermal barrier coating can be applied to the open-porous surface layer in order to further decrease the temperature loading without inhibiting transpiration cooling.

The cooling channels 8 can stop at the interface to the open-porous layer or partly or fully penetrate the open-porous layer. Different types of such channels 8 can be incorporated in the built-up section.

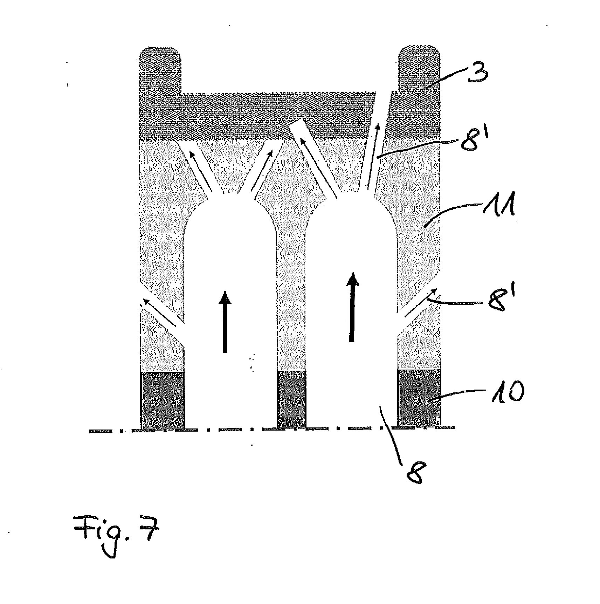

Fig. 7 shows as an example a part of a repaired turbine blade for an ex-service component. The original blade structure 10 with existing cooling holes 8 is covered with a dense, by means of SLM built-up structure 11 with incorporated cooling holes 8, 8' which can extend into the SLM built-up open-porous blade crown 3. The disclosed method avoids the need for letter-box brazing and allows the incorporation of cooling features into the crown with one single process, that means the built up dense structure 11 with incorporated cooling holes /channels 8,8' and the built up open-porous blade crown 3 are built in one single SLM process. This is an important advantage.

In order not to fill existing cooling channels with metal powder, the blade opening can be filled with a polymeric substance and an inorganic filler material which can be burned out after the SLM process in an subsequent heat treatment step. This procedure allows the continuation of existing cooling channels, respectively the connection of a more complex and sophisticated cooling concept (e.g. transpiration cooling) in the built-up section the air supply in the base component.

The design of the built-up section is optimized for the fabrication with the SLM process and avoids sharp edges or big overhanging areas.

In combination with the above-described blade crown an abradable counter-part with selectively tailored porosity can be built up with SLM to reduce wear at the blade tip and optimize the blade tip sealing as for example the a fabrication of a heat shield with increasing porosity towards the heat shield surface at the blade tip contact region using SLM. Thereby, the abradability of the heat shield can be selectively increased at the contact region of the blade tip, without decreasing the materials properties at other locations. With an optimized geometric introduction of the porosity, the wear of the blade tip can be reduced without compromising the sealing behaviour. (see Fig. 1 and Fig. 2).

In another implementation, porosity can be introduced to decrase heat conductivity and thereby increasing insulation properties of the heat shield.

### Second embodiment:

A second embodiment of the invention is transpiration cooling of the turbine blade by a layered structure fabricated by a single additive manufacturing process (see Fig. 6). The inner layer 5 of the blade wall consists of fully dense material with incorporated cooling channels 8 in order to provide mechanical strength and cooling air supply to second, open-porous layer 6. The air (illustrated with arrows) introduced into the outer, open-porous layer results in transpiration cooling 9 of the outer blade surface resulting in an efficient shielding of the surface from the hot gases. In combination with the reduced thermal conductivity of the porous layer 6, the thermal loading on the inner structural layer is considerably reduced.

If required, an additional open-porous ceramic thermal barrier coating 7 can be applied on the porous metal layer 6 in a second process step to provide an additional, also transpiration cooled thermal barrier.

The cooling channels 8 can stop at the interface to the open-porous layer or partly or fully penetrate the open-porous layer 6, 7. Different types of such channels 8 can be incorporated in the built-up section.

In another embodiment it is also possible to apply an outer dense layer of the base material on the porous metal layer 6.

### Third embodiment:

This embodiment refers to a separation of porous structures to prevent penetration of hotgas.

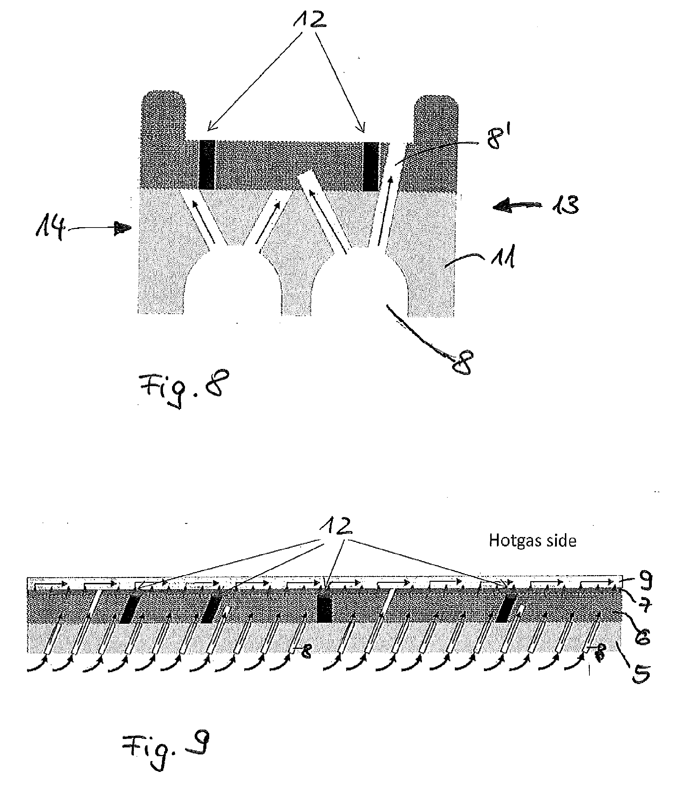

The gas temperature plot along the airfoil illustrates the extend of secondary flows in the hotgas passage. This has an influence on the turbine blade cooling and the material distribution in the blade. Corresponding lines of constant pressure can be shown (not illustrated here). Where such lines are dense the pressure gradients are high. In those areas the open porous structure shall be interrupted by solid ribs 12 which have the effect of a cross-flow barrier to prevent hotgas migration. The ribs 12 separate the suction side 13 from the pressure side 14. This can be seen in Fig. 8, which shows a turbine blade tip analog to Fig. 7.

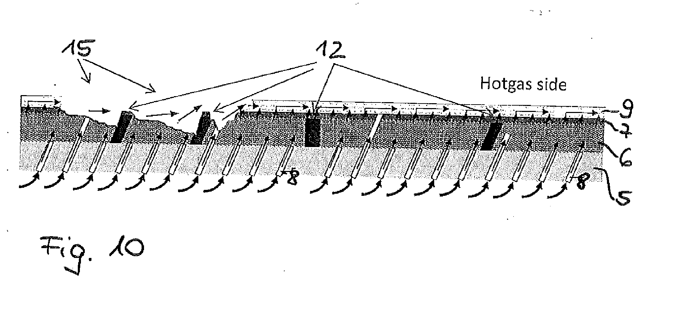

Additional implementations are shown in Fig. 9 and Fig. 10. Fig. 9 is analog to Fig. 6, but with the arrangement of different ribs 12 as cross-flow barriers in the open-porous metal layer 6. Fig. 9 shows the component after manufacturing / short service time with an intact surface, Fig. 10 shows the same component after service with damaged areas 15. Such areas 15 can be oxidation areas or areas of FOD (Foreign Object Damage). The ribs 12 are a barrier in streamwise direction after oxidation and or FOD.

### Fourth embodiment:

A further embodiment of the invention is an airfoil extension with foam-type structures to prevent adding mass.

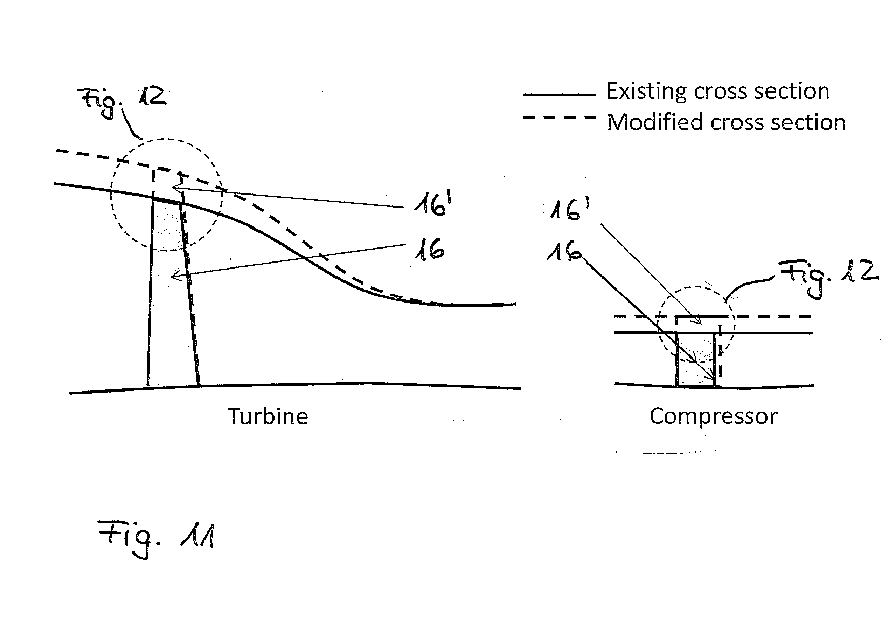

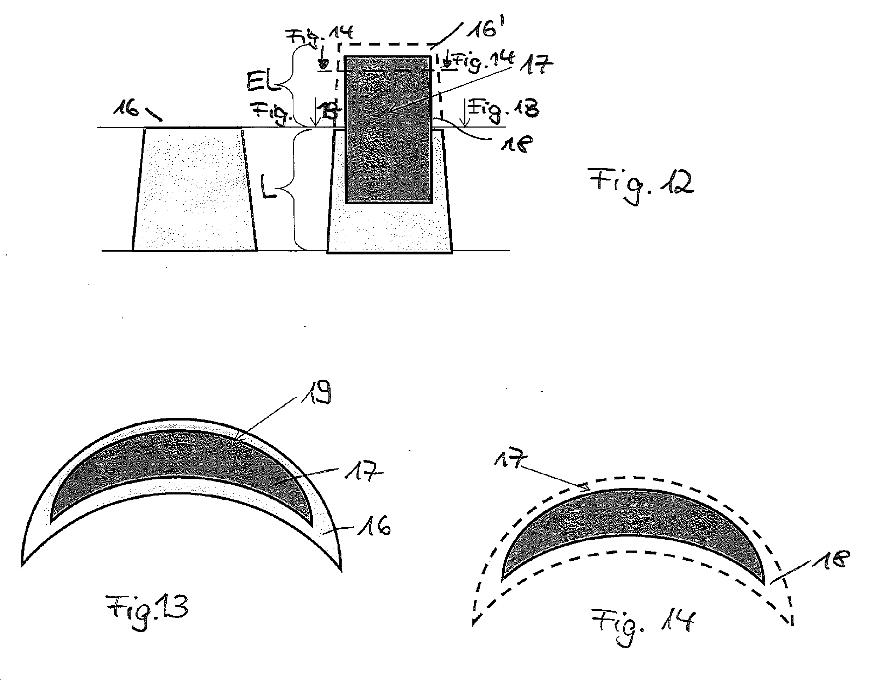

Fig. 11 shows in the left part an airfoil 16,16' of a turbine blade and in the right part an airfoil 16, 16' of a compressor blade with the flow path contours of turbine and compressor, before (continuous line for the existing cross section) and after (dotted line for the modified cross section) increase of flow passage. Such flow passage is done to cope with increased massflow. The pull forces on the rotor are limited and a light-weight extension of the airfoil 16, 16' might be required. 16 is the existing airfoil, 16' the modified airfoil. This can be achieved with porous structures described before and applied with a justified SLM process. Details of Fig. 11 are shown in Fig.12, Fig. 13 and Fig. 14.

In the left part of Fig. 12 the airfoil 16 is shown with the original length L, in the right part of Fig.12 the extended airfoil 16' is shown with an extra length EL. A light weight structure core structure 17 compensates the extra length EL. The core structure is here partly embedded with a solid shell structure 18.

Fig. 13 and Fig. 14 are two cross sections at different length of the airfoil 16' as indicated in Fig. 12. Fig. 13 shows the brazed interface 19, which can be with or without a mechanical interlock between the core 17 and the airfoil 16. Fig. 14 illustrates the core light-weight structure 17 and the shell structure 18, which is an additive built-up. There can be 2 pieces with one or more brazed interfaces, the light weight core and coated top layer/layers or the light-weight core and braze sheet and overlay coatings.

Of course, the present invention is not limited to the described embodiments. It could be used with advantage for producing any three-dimensional article or at least a part of such an article with a wide range of tailored microstructure/porosity/gradients/materials etc. The method is used for producing articles/components or for repairing of already used and damaged articles/components. The articles are preferably made of difficult to weld superalloys or of a non-castable or difficult to machine material and are components or parts of components of turbines, compressors etc.

## Claims

1. Method for producing a three-dimensional article or at least a part of such an article made of a gamma prime (γ') precipitation hardened nickel base superalloy with a high volume fraction (>25 %) of gamma-prima phase which is a difficult to weld superalloy, or made of a cobalt base superalloy, or of a non-castable or difficult to machine metal material by means of selective laser melting (SLM), in which the article is produced by melting of layerwise deposited metal powder with a laser beam **characterized in that** the SLM processing parameters are selectively adjusted to locally tailor the microstructure and/or porosity of the produced article or a part of the article and therefore to optimize desired properties of the finalized article/part of the article.

2. Method according to claim 1 **characterized in that** a subsequent heat treatment step for further adjustment of the microstructure is applied.

3. Method according to claim 1 **characterized in that** the processing parameters to be adjusted are at least one or a combination of laser power, scan velocity, hatch distance, powder shape, powder size distribution, processing atmosphere.

4. Method according to claim 1 **characterized in that** the resulted microstructure and/or porosity of the deposited layers are different.

5. Method according to claim 1 **characterized in that** the resulted microstructure and/or porosity is gradually changing in radial or lateral direction of the article.

6. Method according to claim 1 **characterized in that** the resulted porosity is a closed or opened porosity.

7. Method according to claim 6 **characterized in that** the selectively introduced porosity is used to adjust mass related properties, preferable the eigenfrequency or to counterbalance the effect of additionally added material on an component.

8. Method according to claim 1 **characterized in that** the tailored microstructure comprises in-situ generated second phase particles, preferably hard-phase particles or solid lubricants.

9. Method according to claim 8 **characterized in that** the elements forming the second phase particles, are supplied at least partly by a reactive gas (processing atmosphere) and/or by the SLM metal powder and/or by alloys.

10. Method according to claim 9 **characterized in that** the composition of the reactive gas is actively changed during the SLM process.

11. Method according to claim 9 or 10 **characterized in that** Re, Ti, Ni, W, Mo, B are supplied for forming highly lubricous oxides at high temperatures.

12. Method according to claim 9 characterized that elements forming second phase particles are carbide, boride, nitride, oxide or combinations thereof forming elements, such as Al, Si, Zr, Cr, Re, Ti, Ni, W, Mo, Zn, V.

13. Method according to claim 1 and 2 **characterized in that** existing holes or channels in the article are filled with a polymeric substance and an inorganic filler material prior to the built-up of SLM layers and the polymeric filler is burnt out during a subsequent heat treatment step.

14. Method according to one of claims 1 to 13 **characterized in that** the method is used for producing of new or repairing of used and damaged turbine components.

15. Three-dimensional article or at least a part of such an article produced with a method according to one of claims 1 to 14 **characterized in that** the article is gas turbine component or section/part of a gas turbine component.

16. Article according to claim 15 **characterized in that** that article has a locally tailored microstructure (material composition, layers, gradients and/or porosity).

17. Article according to claim 15 **characterized in that** the article comprises at least one part with an open porous structure.

18. Article according to claim 17 **characterized in that** the article comprises an open-porous outer layer and a fully dense inner layer including cooling channels designed for guiding a cooling medium to the open porous outer layer, which cooling channels either end at the interface to the open porous outer layer or partly or fully penetrate the open-porous outer layer.

19. Article according to claim 17 **characterized in that** an open porous surface thermal barrier coating layer is applied onto the open porous outer layer.

20. Article according to claim 15 **characterized in that** the article comprises a complex design structure, but without overhanging areas with an angle of ≥ 45 ° or with sharp concave edges.

21. Article according to claim 15 **characterized in that** the article is a turbine blade crown.

22. Article according to claim 15 **characterized in that** the article is a turbine component, on which the section built is either new or an ex-service component.
